# EUROPEAN PATENT APPLICATION

(11) **EP 2 854 284 A2**
(43) Date of publication of application: **01.04.2015**
(21) Application number: 14186294.6
(22) Date of filing: 25.09.2014
(51) Int. Cl.: H02P 27/16, H02P 29/00

(54) **Wind power generation system, method for controlling wind power generation system, rotary electric machine system, and control device for rotary electric machine**

(30) Priority: 27.09.2013 JP 2013200833
(71) Applicant: Kabushiki Kaisha Yaskawa Denki, Kitakyushu-shi, Fukuoka 806-0004 (JP)
(72) Inventor: OBA, Koichi, Kitakyushu-shi, Fukuoka 806-0004 (JP); MIYAMOTO, Yasuhiro, Kitakyushu-shi, Fukuoka 806-0004 (JP)
(74) Representative: Grünecker, Kinkeldey, Stockmair & Schwanhäusser

(57) **Abstract**

A wind power generation system (1) according to an aspect of an embodiment includes a rotary electric machine (10) and a temperature rise control unit (51). The temperature rise control unit (51) causes winding (12b) of the rotary electric machine (10) to be energized so that the temperature of the rotary electric machine (10) is raised.

## Description

### FIELD

The embodiment discussed herein is directed to a wind power generation system, a method for controlling a wind power generation system, a rotary electric machine system, and a control device for a rotary electric machine.

### BACKGROUND

In the related art, known is a wind power generation system that rotates a propeller by wind power, and drives a rotary electric machine by rotation of the propeller to generate electric power. The wind power generation system further includes, in addition to the rotary electric machine for electric power generation as described above, a rotary electric machine for changing a pitch angle of each blade of the propeller and a rotary electric machine for rotationally drive a nacelle with respect to a tower body, for example.

The wind power generation system may be installed outdoors in a cold district. In this case, when the wind power generation system is started, a temperature of a bearing of the rotary electric machine decreases and viscosity of grease increases depending on an environment temperature, so that lubrication performance of the bearing may be decreased and the rotary electric machine may not be smoothly rotated in some cases. Accordingly, a technique has been developed for preventing the lubrication performance of the bearing from being decreased by raising the temperature of the bearing using a heater when the environment temperature is low (for example, refer to Japanese Patent Application Laid-open No. 2007-198167).

However, in recent years, there has been a demand for a technique for raising the temperature of the bearing in the rotary electric machine without using the heater as described above. Such a technique is also required for a rotary electric machine installed at a place where the environment temperature is relatively low, not only for the rotary electric machine of the wind power generation system described above.

According to an aspect of an embodiment, provided are a wind power generation system that can raise the temperature of the bearing of the rotary electric machine without using the heater to prevent the lubrication performance of the bearing from being decreased, a method for controlling the wind power generation system, a rotary electric machine system, and a control device for a rotary electric machine.

### SUMMARY

A wind power generation system according to an aspect of an embodiment includes a rotary electric machine and a temperature rise control unit. The temperature rise control unit causes winding of the rotary electric machine to be energized so that the temperature of the rotary electric machine is raised.

According to an aspect of the embodiment, the temperature of the bearing of the rotary electric machine can be raised without using the heater, and the lubrication performance of the bearing can be prevented from being decreased.

### BRIEF DESCRIPTION OF DRAWINGS

FIG. 1 is a block diagram illustrating a configuration of a wind power generation system according to an embodiment;
FIG. 2 is a schematic cross-sectional view of an induction machine;
FIG. 3 is a schematic cross-sectional view of a synchronous machine;
FIG. 4 is a diagram illustrating a configuration example of a power conversion unit;
FIG. 5 is a diagram illustrating a configuration example of a bidirectional switch illustrated in FIG. 4;
FIG. 6 is a graph illustrating rotational torque generated in a rotary electric machine when an alternating current is supplied to the synchronous machine;
FIG. 7 is a schematic diagram illustrating the overall wind power generation system;
FIG. 8 is a schematic side view schematically illustrating a configuration of a rotary electric machine for electric power generation, a rotary electric machine for a pitch angle, and the like;
FIG. 9 is a schematic side view schematically illustrating a configuration of a rotary electric machine for a nacelle, and the like; and
FIG. 10 is a flowchart illustrating specific processing of a temperature raising operation for raising the temperature of the rotary electric machine.

### DESCRIPTION OF EMBODIMENT

### Configuration of wind power generation system

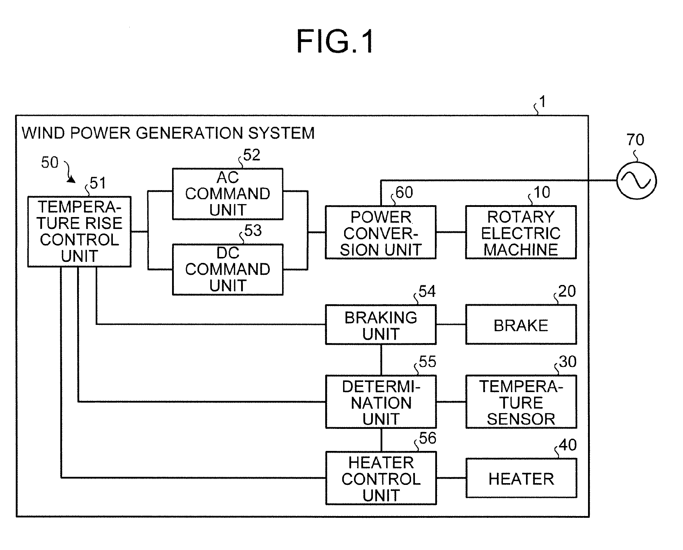

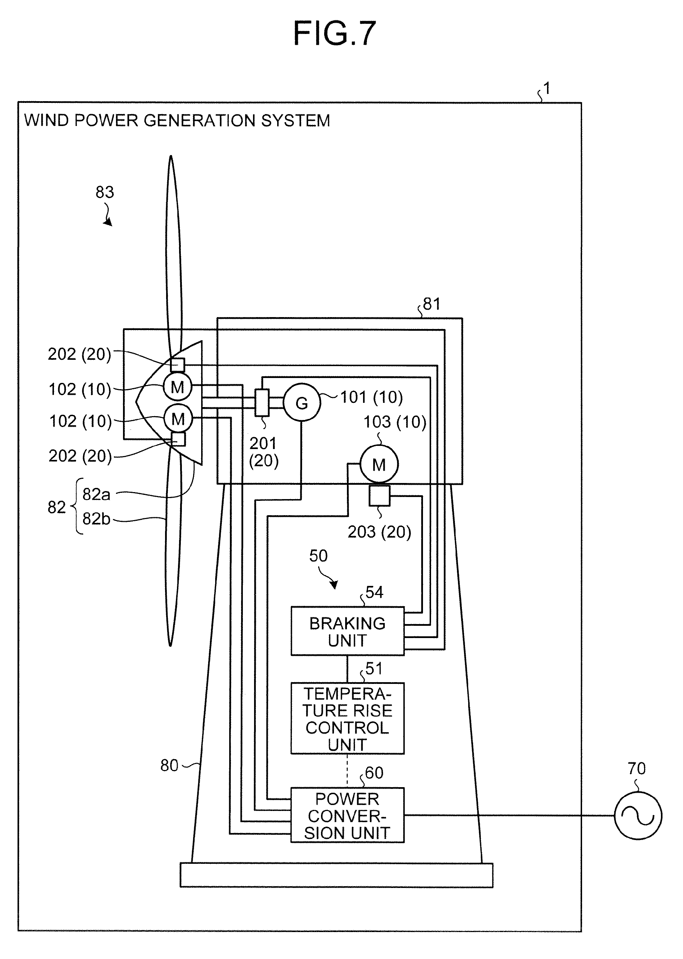

FIG. 1 is a block diagram illustrating a configuration of a wind power generation system according to an embodiment. For clarity, part of the configuration of the wind power generation system is not illustrated in FIG. 1. The configuration not illustrated in FIG. 1 will be described later with reference to FIG. 7.

As illustrated in FIG. 1, a wind power generation system 1 according to the embodiment includes a rotary electric machine 10, a brake 20, a temperature sensor 30, a heater 40, a control device 50 for a rotary electric machine, and a power conversion unit 60.

There are a plurality of rotary electric machines 10 in the wind power generation system 1 as described later. Each of the rotary electric machines 10 functions as a power generator or an electric motor according to a use. In FIG. 1, for convenience of understanding, one of the rotary electric machines 10 will be described as an example. The rotary electric machine 10 in FIG. 1 may be any of the power generator and the electric motor, and may even be a rotary electric machine including both functions as the power generator and the electric motor.

The brake 20 brakes rotation of the rotary electric machine 10. The temperature sensor 30 outputs a signal indicating the temperature of the rotary electric machine 10. The heater 40 heats the rotary electric machine 10. The power conversion unit 60 converts electric power from an AC power supply 70 to be output to the rotary electric machine 10.

The control device 50 for the rotary electric machine 10 includes a temperature rise control unit 51, an AC command unit 52, a DC command unit 53, a braking unit 54, a determination unit 55, and a heater control unit 56.

The temperature rise control unit 51 causes winding (not illustrated in FIG. 1) of the rotary electric machine 10 to be energized so that the temperature of the rotary electric machine 10 is raised. Because of the temperature rise in the rotary electric machine 10, the temperature of a bearing (described later) provided in the rotary electric machine 10 can be raised without using the heater. Accordingly, the temperature of grease in the bearing is increased and viscosity of the grease is decreased, so that the lubrication performance of the bearing can be prevented from being decreased.

The AC command unit 52 causes an alternating current to be supplied to the rotary electric machine 10 when the temperature rise control unit 51 causes the winding of the rotary electric machine 10 to be energized. The DC command unit 53 causes a direct current to be supplied to the rotary electric machine 10 when the temperature rise control unit 51 causes the winding of the rotary electric machine 10 to be energized. The braking unit 54 controls an operation of the brake 20. The determination unit 55 determines whether the temperature of the rotary electric machine 10 satisfies a certain condition (described later). The heater control unit 56 controls an operation of the heater 40.

The following specifically describes components such as the rotary electric machine 10 and the control device 50 for a rotary electric machine described above.

### Configuration of rotary electric machine

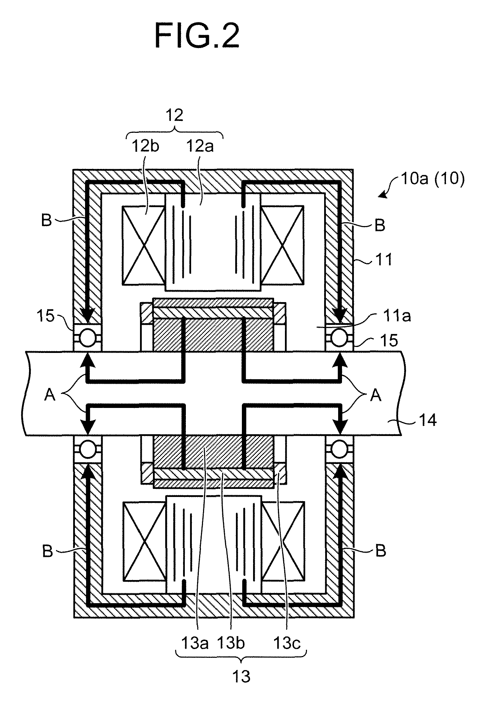

The rotary electric machine 10 is, for example, a squirrel-cage induction machine. FIG. 2 is a schematic cross-sectional view of an induction machine 10a as the rotary electric machine 10. As illustrated in FIG. 2, the induction machine 10a includes a frame 11, a stator 12, a rotor 13, a rotor shaft 14, and a bearing 15.

The frame 11 is formed in a cylindrical shape having an internal space 11a. The stator 12, the rotor 13, and the like are arranged in the internal space 11a. The frame 11 is fixed to an appropriate position of the wind power generation system 1 via a column (not illustrated).

The stator 12 is fixed to an inner periphery of the frame 11. The stator 12 includes a stator core 12a and winding 12b. On the inner peripheral side of the stator 12, the rotor 13 is arranged opposite thereto across a clearance.

The rotor 13 includes a rotor core 13a, a rotor bar 13b, and an end ring 13c. The rotor core 13a is formed in a cylindrical shape and attached to an outer peripheral surface of the rotor shaft 14. A plurality of rotor bars 13b are embedded in the vicinity of the outer periphery of the rotor core 13a. The rotor bar 13b is arranged so that both ends thereof are exposed from the rotor core 13a, and the exposed portions are coupled with the end ring 13c.

The rotor shaft 14 is rotatably journaled to the bearing 15 fixed to the frame 11. The bearing 15 is filled with grease (not illustrated) and lubricated with the grease. In the above example, the squirrel-cage induction machine is exemplified as the induction machine 10a. However, the embodiment is not limited thereto. The induction machine 10a may be a wound-rotor induction machine.

When the AC command unit 52 causes the alternating current to be supplied to the winding 12b of the rotary electric machine 10 (induction machine 10a) described above, a rotating magnetic field is generated in the stator 12, and an induction current flows through the rotor 13 due to the rotating magnetic field.

The rotor shaft 14 of the rotary electric machine 10 is rotated by the induction current. However, the braking unit 54 activates the brake 20 (not illustrated in FIG. 2) to cause the rotor shaft 14 to be in a static state or an extremely low speed state so that a slip S is 1 or a value slightly smaller than 1.

Due to this, energy assumed to be used for rotating the rotor shaft 14 is converted into thermal energy in the rotary electric machine 10, and the rotor 13 is caused to perform self-heating. That is, heat is generated in the rotor 13 due to electromagnetic induction from the winding 12b. As illustrated with arrows A in FIG. 2, for example, the heat generated in the rotor 13 is transmitted to the bearing 15 via the rotor shaft 14 of which heat transfer coefficient is relatively high, so that the temperature of the bearing 15 is raised.

In the above example, the braking unit 54 causes the rotary electric machine 10 to stop or rotate at an extremely low speed. However, it is preferable that the braking unit 54 causes the rotary electric machine 10 to stop. When the rotary electric machine 10 is stopped, more energy that is assumed to be used for rotating the rotor shaft 14 is converted into the thermal energy as compared to the case in which the rotary electric machine 10 is rotated at an extremely low speed, so that the rotor 13 is caused to generate more heat.

Heat is also generated, due to winding resistance, in the stator 12 to which the alternating current is supplied. As illustrated with arrows B in FIG. 2, the heat generated in the stator 12 is transmitted to the bearing 15 via the frame 11 of which heat transfer coefficient is relatively high, so that the temperature of the bearing 15 is raised.

In this way, while the braking unit 54 causes the rotary electric machine 10 to stop or rotate at an extremely low speed, the AC command unit 52 commands that the alternating current be supplied to the winding 12b of the induction machine 10a. Accordingly, heat is generated in both of the rotor 13 and the stator 12, so that the temperature of the bearing 15 of the rotary electric machine 10 can be raised at an early stage.

If the rotary electric machine is configured to be partially heated, a difference occurs between thermal expansion amounts of respective parts of the rotary electric machine, so that a service life of the rotary electric machine may be reduced. However, in the embodiment, heat is generated in the rotor 13 or the stator 12 arranged in the frame 11, so that it is possible to raise the temperature of the entire rotary electric machine 10 including the bearing 15. Accordingly, a difference hardly occurs between the thermal expansion amounts of respective parts of the rotary electric machine 10, so that the service life of the rotary electric machine 10 can be prevented from being reduced.

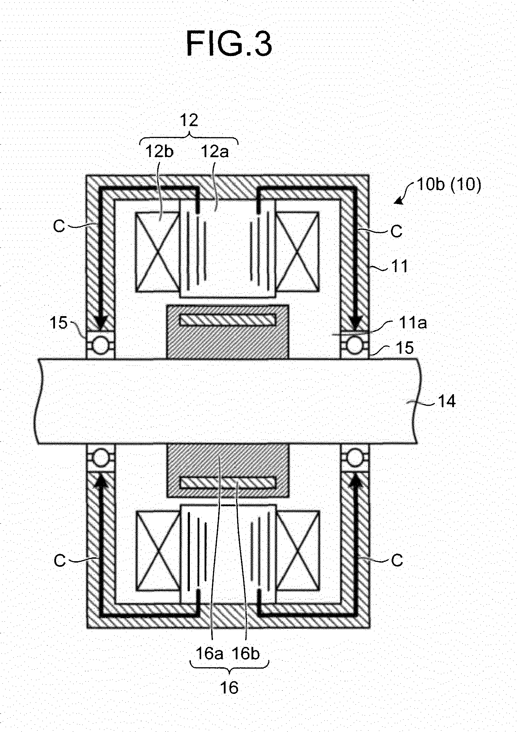

In the above example, the induction machine 10a is exemplified as the rotary electric machine 10. However, the rotary electric machine 10 is not limited thereto, and may be a synchronous machine. FIG. 3 is a schematic cross-sectional view of a synchronous machine 10b for explaining an example in which the rotary electric machine 10 is the synchronous machine 10b. In FIG. 3, components substantially the same as those of the induction machine 10a are denoted by the same reference numerals, and the description thereof is not repeated here.

As illustrated in FIG. 3, a rotor 16 of the synchronous machine 10b includes a cylindrical rotor core 16a arranged on the outer peripheral surface of the rotor shaft 14 and a plurality of permanent magnets 16b embedded on the outer peripheral side of the rotor core 16a. That is, the synchronous machine 10b is an interior permanent magnet (IPM) synchronous machine. The synchronous machine 10b is not limited to the IPM synchronous machine, and may be a surface permanent magnet (SPM) synchronous machine.

The AC command unit 52 causes the alternating current to be supplied to the winding 12b of the rotary electric machine 10 (synchronous machine 10b) described above, and the braking unit 54 activates the brake 20 (not illustrated in FIG. 3) to cause the rotor shaft 14 to be in a static state or an extremely low speed state. Accordingly, the heat is generated in the stator 12 due to the winding resistance. As illustrated with arrows C in FIG. 3, the heat generated in the stator 12 is transmitted to the bearing 15 via the frame 11 and the like of which heat transfer coefficient is relatively high, so that the temperature of the bearing 15 is raised.

In the above example, the alternating current is supplied to the winding 12b of the rotary electric machine 10. Alternatively, the direct current may be supplied thereto by the DC command unit 53. Even when the direct current is supplied to the winding 12b, heat is generated in the stator 12 due to the winding resistance, so that the heat in the stator 12 is transmitted to the bearing 15 through the routes indicated by the arrows B or the arrows C to raise the temperature of the bearing 15.

When the direct current is supplied, the rotating magnetic field is not generated in the stator 12 and rotational torque is not generated in the rotor 13 and the rotor shaft 14, so that the braking unit 54 is not necessarily required to operate the brake 20 to cause the rotor shaft 14 in a static state or the like.

Returning to FIG. 1, the brake 20 is connected to the rotor shaft 14 of the rotary electric machine 10 to brake the rotor shaft 14. As the brake 20, an electromagnetic or hydraulic disk brake can be used. However, the brake 20 is not limited thereto, and may be other type of brake such as a drum brake.

The temperature sensor 30 is arranged in the vicinity of the rotary electric machine 10, and outputs a signal indicating the temperature of the rotary electric machine 10. The heater 40 is mounted to the frame 11 of the rotary electric machine 10, and heats the rotary electric machine 10 when energized by the heater control unit 56. As the heater 40, an electric heater can be used.

### Configuration of power conversion unit

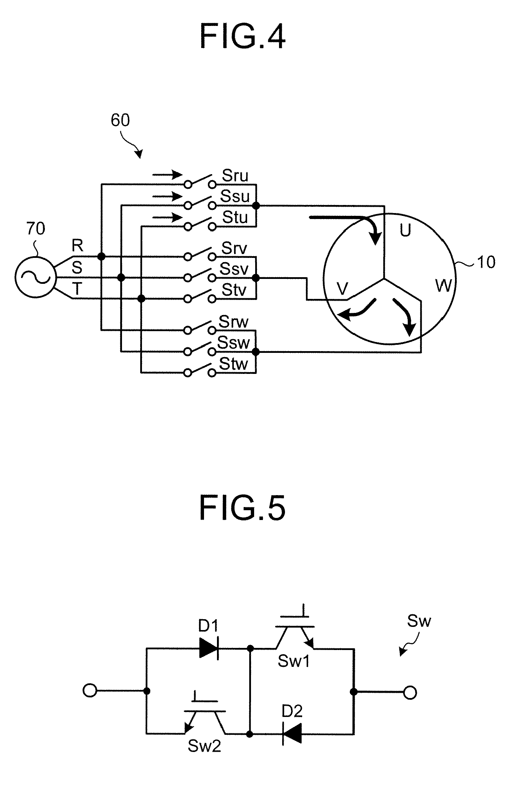

The power conversion unit 60 performs power conversion bidirectionally between the rotary electric machine 10 and the AC power supply 70. As the power conversion unit 60, a matrix converter can be used. A configuration example of the power conversion unit 60 will be described with reference to FIG. 4. FIG. 4 is a diagram illustrating a configuration example of the power conversion unit 60.

The power conversion unit 60 is a matrix converter including a plurality of bidirectional switches Sru, Ssu, Stu, Srv, Ssv, Stv, Srw, Ssw, and Stw (hereinafter, collectively referred to as a bidirectional switch Sw in some cases) arranged between respective phases of the AC power supply 70 and respective phases of the rotary electric machine 10.

Each of the bidirectional switches Sru, Ssu, and Stu is connected between each of an R-phase, an S-phase, and a T-phase of the AC power supply 70 and a U-phase of the rotary electric machine 10. Each of the bidirectional switches Srv, Ssv, and Stv is connected between each of the R-phase, the S-phase, and the T-phase of the AC power supply 70 and a V-phase of the rotary electric machine 10. Each of the bidirectional switches Srw, Ssw, and Stw is connected between each of the R-phase, the S-phase, and the T-phase of the AC power supply 70 and a W-phase of the rotary electric machine 10.

The bidirectional switch Sw is configured by, as illustrated in FIG. 5, diodes D1 and D2 and unidirectional switching elements Sw1 and Sw2. FIG. 5 is a diagram illustrating a configuration example of the bidirectional switch Sw illustrated in FIG. 4. Examples of the unidirectional switching elements Sw1 and Sw2 include a semiconductor switching element such as a metal-oxide-semiconductor field-effect transistor (MOSFET) or an insulated gate bipolar transistor (IGBT).

The configuration of the bidirectional switch Sw is not limited to that illustrated in FIG. 5. The bidirectional switch Sw may have a configuration in which series-connected bodies of the unidirectional switching element and the diode are connected in antiparallel. The bidirectional switch Sw may have a configuration in which the unidirectional switching elements configured by reverse-blocking type switching elements are connected in parallel in opposite directions to each other.

In this way, when the matrix converter is used as the power conversion unit 60, a harmonic filter or an electrolytic capacitor becomes unnecessary unlike the case of using the conventional inverter, so that the wind power generation system 1 can be simplified. Because the electrolytic capacitor and the like become unnecessary, the size of the wind power generation system 1 can be reduced and maintainability thereof can be improved.

### Configuration of control device for rotary electric machine

Returning to FIG. 1, the temperature rise control unit 51 of the control device 50 for a rotary electric machine causes the winding 12b of the rotary electric machine 10 to be energized by controlling the torque. The temperature rise control unit 51 outputs a torque command for indicating rotational torque of the rotary electric machine 10 to the AC command unit 52 and the DC command unit 53. The temperature rise control unit 51 also outputs an operation command for operating the brake 20 to the braking unit 54.

The torque command described above is set so that the rotational torque of the rotary electric machine 10 becomes a certain value. Specifically, the torque command is set so that the rotational torque becomes a value lower than braking torque of the brake 20.

The temperature rise control unit 51 controls the torque such that the rotational torque generated by energization to the winding 12b of the rotary electric machine 10 is lower than the braking torque of the brake 20. Accordingly, the braking unit 54 can easily cause the rotary electric machine 10 to stop or rotate at an extremely low speed by activating the brake 20. Due to this, heat is securely generated in the rotor 13 and the stator 12 of the rotary electric machine 10.

Because the temperature rise control unit 51 causes the winding 12b of the rotary electric machine 10 to be energized by controlling the torque, it is possible to prevent that an abnormality determination unit (not illustrated) determines that abnormality occurs in the rotation of the rotary electric machine 10. When the temperature rise control unit causes the winding of the rotary electric machine to be energized by speed control or position control in a state in which the brake is activated, the speed or the position of the rotor shaft does not reach an indicated value regardless of the energization, so that the abnormality determination unit may determine that abnormality occurs in the rotation of the rotary electric machine in some cases. Accordingly, in the embodiment, the temperature rise control unit 51 causes the winding 12b of the rotary electric machine 10 to be energized by controlling the torque. Due to this, the commanded rotational torque is generated in the rotary electric machine 10 even when the brake 20 is activated, so that it is possible to prevent that the abnormality determination unit determines that abnormality occurs in the rotation of the rotary electric machine 10.

When the torque command is output from the temperature rise control unit 51, the AC command unit 52 controls an operation of the power conversion unit 60 to supply the alternating current corresponding to the torque command to the rotary electric machine 10. In a case of such AC energization, a burden to the switching element of the bidirectional switch Sw in the power conversion unit 60 can be reduced as compared to a case of DC energization.

When the torque command is output from the temperature rise control unit 51, the DC command unit 53 controls the operation of the power conversion unit 60 to supply the direct current corresponding to the torque command.

The AC command unit 52 and the DC command unit 53 generate a voltage command based on the torque command, and control the operation of the power conversion unit 60 to output a voltage corresponding to the voltage command to the rotary electric machine 10 using a PWM control method of the matrix converter.

In the wind power generation system 1, a mode can be switched between an AC mode for supplying the alternating current to the rotary electric machine 10 and a DC mode for supplying the direct current to the rotary electric machine 10. The AC command unit 52 controls the operation of the power conversion unit 60 when the AC mode is selected. On the other hand, the DC command unit 53 controls the operation of the power conversion unit 60 when the DC mode is selected.

The selection between the AC mode and the DC mode described above is set in advance. However, the embodiment is not limited thereto. For example, a user may perform selection between the AC mode and the DC mode via an external apparatus (not illustrated).

The braking unit 54 is connected to the brake 20. When the operation command is output from the temperature rise control unit 51, the braking unit 54 controls the operation of the brake 20 to brake the rotor shaft 14 of the rotary electric machine 10. As described above, the braking unit 54 causes the rotary electric machine 10 to stop or rotate at an extremely low speed by activating the brake 20. Herein, the rotation at an extremely low speed means rotation at a crawling speed not leading to a steady operation, that is, the rotation at an extremely low speed as compared to the rotation of the rotary electric machine 10 in the steady operation.

In the above example, the braking unit 54 activates the brake 20 corresponding to the operation command from the temperature rise control unit 51. However, the embodiment is not limited thereto. The braking unit 54 may appropriately activate the brake 20 depending on a rotation state of the rotor shaft 14, for example.

The determination unit 55 detects the temperature of the rotary electric machine 10 based on a signal output from the temperature sensor 30, and determines whether the detected temperature of the rotary electric machine 10 satisfies a certain condition. When a value of the temperature of the rotary electric machine 10 is relatively low and the bearing 15 is required to be heated, the determination unit 55 determines that the certain condition is satisfied.

As described in more detail below, when the temperature of the rotary electric machine 10 is low, the temperature of the bearing 15 is lowered, and the viscosity of the grease increases. When the viscosity of the grease increases, lubrication performance of the bearing 15 may be decreased. Accordingly, the determination unit 55 is configured to determine that the certain condition is satisfied and the bearing 15 is required to be heated when the temperature of the rotary electric machine 10 is low. If it is determined that the temperature of the rotary electric machine 10 satisfies the certain condition, the determination unit 55 outputs, to the temperature rise control unit 51, a temperature rise permission signal for permitting an operation to raise the temperature of the rotary electric machine 10.

The heater control unit 56 is connected to the heater 40 and controls the operation of the heater 40. The heater control unit 56 is further configured to be capable of detecting presence/absence of a failure in the heater 40 such as a break. When detecting the failure in the heater 40, the heater control unit 56 outputs a failure signal to the temperature rise control unit 51. The temperature rise control unit 51 receives the temperature rise permission signal from the determination unit 55 and the failure signal from the heater control unit 56, and causes the winding 12b to be energized to raise the temperature of the rotary electric machine 10.

The following describes configuration examples of three cases: a case in which the alternating current is supplied to the induction machine 10a; a case in which the alternating current is supplied to the synchronous machine 10b; and the direct current is supplied to the synchronous machine 10b.

### Case in which alternating current is supplied to induction machine

In the above embodiment, when the configuration is such that the rotary electric machine 10 is the induction machine 10a and the alternating current is supplied to the rotary electric machine 10, first, the temperature rise control unit 51 outputs the operation command to the braking unit 54. When the operation command is output from the temperature rise control unit 51, the braking unit 54 activates the brake 20 to cause the rotary electric machine 10 to be in a static state and the like. The temperature rise control unit 51 outputs the torque command to the AC command unit 52. The AC command unit 52 receives the torque command, and controls the operation of the power conversion unit 60 so that the alternating current corresponding to the torque command is supplied to the rotary electric machine 10.

### Case in which alternating current is supplied to synchronous machine

In the above embodiment, when the configuration is such that the rotary electric machine 10 is the synchronous machine 10b and the alternating current is supplied to the rotary electric machine 10, the temperature rise control unit 51 outputs the operation command to the braking unit 54. When the operation command is output, the braking unit 54 activates the brake 20 to cause the rotary electric machine 10 to be in a static state or an extremely low speed state. The temperature rise control unit 51 outputs the torque command to the AC command unit 52. The AC command unit 52 controls the operation of the power conversion unit 60 so that the alternating current corresponding to the output torque command is supplied to the rotary electric machine 10.

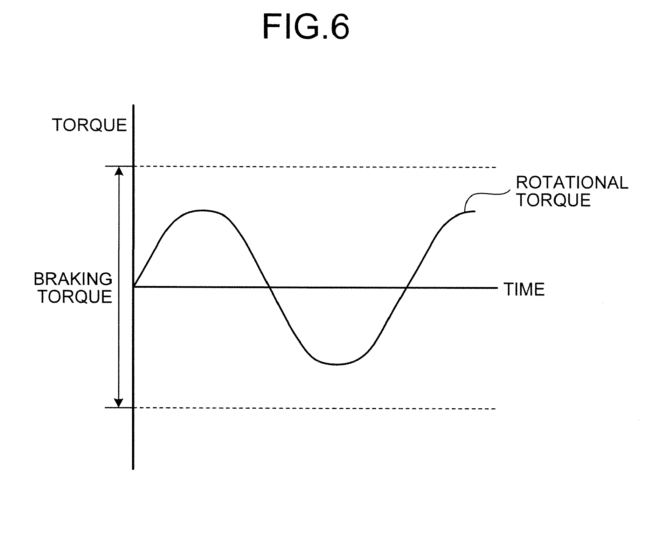

When the alternating current is supplied to the synchronous machine 10b, sinusoidal rotational torque as illustrated in FIG. 6 is generated in the synchronous machine 10b. FIG. 6 is a graph illustrating the rotational torque generated in the synchronous machine 10b when the alternating current is supplied to the synchronous machine 10b.

The synchronous machine 10b is vibrated due to torque pulsation of the sinusoidal rotational torque described above. To suppress generation of the vibration, a rotating magnetic field speed of the stator 12 should be reduced and the rotor shaft 14 is also required to be rotated at a low speed. In addition, the temperature rise control unit 51 is required to control the energization so that the sinusoidal rotational torque does not exceed the braking torque of the brake 20. As a result, the temperature of the synchronous machine 10b may not be efficiently raised. Accordingly, when the rotary electric machine 10 is the synchronous machine 10b, the direct current is preferably supplied from the power conversion unit 60 to the rotary electric machine 10.

When the power conversion unit is the inverter, electric current is concentrated on a specific switching element and the burden is increased, which may cause reduction in reliability of the power conversion unit.

### Case in which direct current is supplied to synchronous machine

In the above embodiment, when the configuration is such that the rotary electric machine 10 is the synchronous machine 10b and the direct current is supplied to the rotary electric machine 10, the matrix converter is used as the power conversion unit 60.

Specifically, the temperature rise control unit 51 outputs the torque command to the DC command unit 53. The DC command unit 53 receives the torque command, and controls the operation of the power conversion unit 60 including the matrix converter so that the direct current corresponding to the torque command is supplied to the rotary electric machine 10.

Accordingly, when generating the direct current that flows into the U-phase and flows out of the V-phase and the W-phase as the arrows illustrate in FIG. 4, the DC command unit 53 may appropriately switch the bidirectional switches Sru, Ssu, and Stu. Due to this, the electric current is prevented from being concentrated on a specific switching element, so that the burden on the switching element can be reduced and the reduction in the reliability of the power conversion unit 60 can be suppressed.

### Configuration of rotary electric machine in wind power generation system

The wind power generation system 1 includes a plurality of rotary electric machines 10 according to a use. The above-described configuration of raising the temperature of the rotary electric machine 10 can be applied to each of the rotary electric machines 10. The rotary electric machine 10 to which the configuration is applied will be described with reference to FIG. 7 and subsequent drawings.

FIG. 7 is a schematic diagram illustrating the overall wind power generation system 1. In FIG. 7 and subsequent drawings, for simplicity of illustration, the temperature sensor 30, the heater 40, and the like are not illustrated.

As illustrated in FIG. 7, the wind power generation system 1 includes a plurality of rotary electric machines 10 and a windmill 83 including a tower body 80, a nacelle 81, and a propeller 82. The nacelle 81 is rotatably supported on the tower body 80. The propeller 82 includes a hub 82a and a plurality of (for example, three) blades 82b mounted to different positions of the hub 82a. A pitch angle of each of the blades 82b can be changed.

Specifically, the rotary electric machines 10 include a rotary electric machine 101 for electric power generation that is connected to the propeller 82 and generates electric power by rotation of the propeller 82, a rotary electric machine 102 for a pitch angle that changes the pitch angle of the blade 82b, and a rotary electric machine 103 for a nacelle that rotates the nacelle 81.

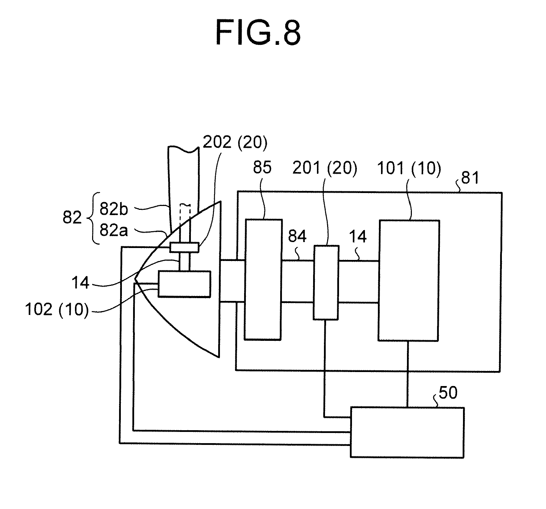

FIG. 8 is a schematic side view schematically illustrating the configuration of the rotary electric machines 101 and 102, and the like. As illustrated in FIG. 8, the rotary electric machine 101 is accommodated in the nacelle 81 and connected to the propeller 82 via a propeller shaft 84. The rotary electric machine 101 and the propeller 82 are connected to each other so that the rotor shaft 14 and the propeller shaft 84 are coaxial with each other. Specifically, the rotary electric machine 101 is a power generator, which is a rotary electric machine that can also be used as an electric motor.

A brake 201 and a speed-increasing gear 85 are arranged in the nacelle 81 in addition to the rotary electric machine 101 described above. The brake 201 corresponds to the brake 20 illustrated in FIG. 1, and brakes the rotor shaft 14 of the rotary electric machine 101 and the propeller shaft 84.

The speed-increasing gear 85 is connected to the propeller shaft 84, increases speed of rotation of the propeller 82, and transmits the rotation to the rotary electric machine 101. The rotary electric machine 101 converts rotational energy caused by the rotation, the speed of which is increased by the speed-increasing gear 85, into electric energy to generate electric power.

The rotary electric machine 102 is accommodated in the hub 82a and connected to the blade 82b via the rotor shaft 14. The blade 82b is rotated due to the rotation of the rotary electric machine 102, which changes the pitch angle of the blade 82b.

For simplicity of illustration, FIG. 8 illustrates only one of the blades 82b and the rotary electric machine 102 connected to the blade 82b. However, the rotary electric machines 102 of the number corresponding the blades 82b are actually accommodated in the hub 82a.

A brake 202 is arranged in the hub 82a in addition to the rotary electric machine 102. The brake 202 also corresponds to the brake 20 illustrated in FIG. 1, and brakes the rotor shaft 14 of the rotary electric machine 102.

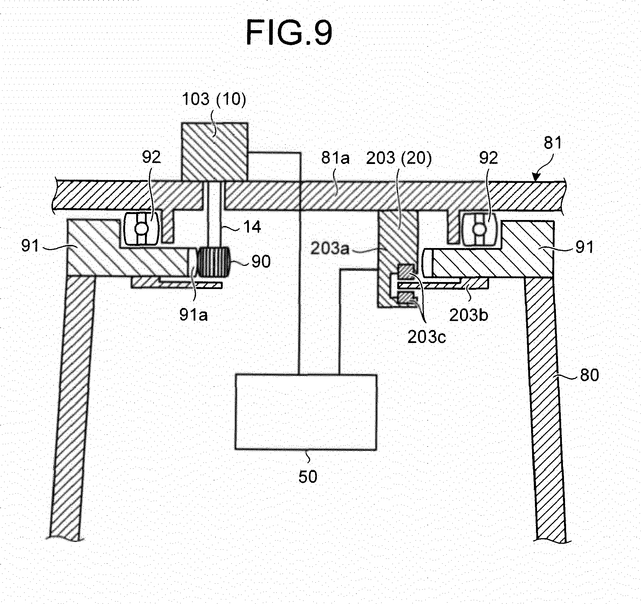

Returning to FIG. 7, the rotary electric machine 108 is also arranged in the nacelle 81 similarly to the rotary electric machine 101. FIG. 9 is a schematic side view schematically illustrating the configuration of the rotary electric machine 103 and the like. As illustrated in FIG. 9, the rotary electric machine 103 is fixed to a bottom plate 81a of the nacelle 81 and arranged so that the rotor shaft 14 projects to the tower body 80 side. A first gear 90 is attached to a tip of the rotor shaft 14 of the rotary electric machine 103.

A gear rim 91 is fixed to an upper end position of the tower body 80 in proximity to the nacelle 81. A second gear 91a engaged with the first gear 90 is formed on the inner peripheral side of the gear rim 91. The nacelle 81 is rotatably supported on the gear rim 91 via the bearing 92. Accordingly, when the rotary electric machine 103 is rotated, the first gear 90 is displaced relatively to the second gear 91a while engaged with the second gear 91a along with the rotation, so that the nacelle 81 is rotated with respect to the tower body 80.

A brake 203 is arranged on the tower body 80 side of the bottom plate 81a of the nacelle 81. The brake 203 corresponds to the brake 20 illustrated in FIG. 1, specifically, a disk brake. In the brake 203, a main body part 203a is fixed to the nacelle 81, and a disk part 203b is fixed to the gear rim 91. Accordingly, when the brake 203 is activated to hold the disk part 203b with pad parts 203c of the main body part 203a, the nacelle 81 is prevented from being rotated with respect to the tower body 80.

When the brake 203 is activated, the nacelle 81 is prevented from being rotated with respect to the tower body 80, so that the first gear 90 is not displaced relatively to the second gear 91a and the rotor shaft 14 of the rotary electric machine 103 is braked.

Configurations of raising the temperatures of the rotary electric machines 101, 102, and 103 are applied to the rotary electric machines 101, 102, and 103, respectively.

### Temperature raising operation for raising temperature of rotary electric machine

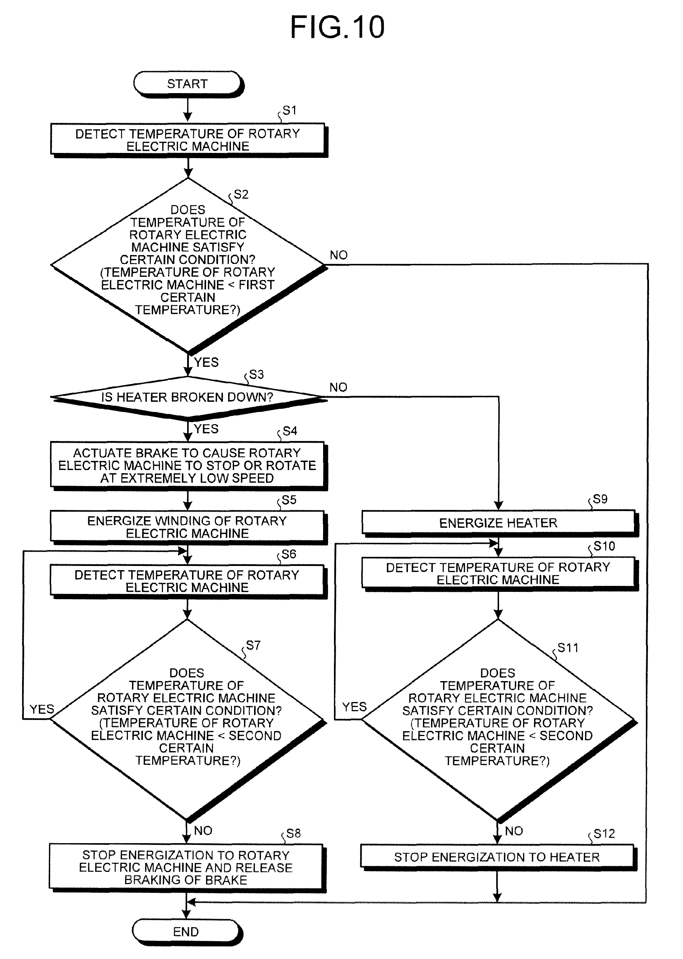

The following describes specific processing of a temperature raising operation for raising the temperature of the rotary electric machine 10. FIG. 10 is a flowchart illustrating the processing of the temperature raising operation. The processing illustrated in FIG. 10 is performed by the control device 50 for a rotary electric machine. The processing illustrated in FIG. 10 is performed at the time when the wind power generation system 1 is started. However, the embodiment is not limited thereto. Alternatively, for example, the processing may be performed at appropriate timing during a normal operation of the wind power generation system 1.

First, the determination unit 55 of the control device 50 for a rotary electric machine detects the temperature of the rotary electric machine 10 based on a signal output from the temperature sensor 30 (Step S1). Next, the determination unit 55 determines whether the detected temperature of the rotary electric machine 10 satisfies a certain condition (Step S2). The processing at Step S2 is processing for determining whether the temperature of the bearing 15 needs to be raised, and determines whether the temperature of the rotary electric machine 10 is lower than a first certain temperature.

If it is determined that the temperature of the rotary electric machine 10 is equal to or higher than the first certain temperature, that is, it is determined that the temperature of the rotary electric machine 10 does not satisfy the certain condition and the temperature of the bearing 15 does not need to be raised (No at Step S2), the processing is ended as it is. On the other hand, if it is determined that the temperature of the rotary electric machine 10 is lower than the first certain temperature, that is, it is determined that the temperature of the rotary electric machine 10 satisfies the certain condition and the temperature of the bearing 15 needs to be raised (Yes at Step S2), the heater control unit 56 determines whether the heater 40 is broken down (Step S3).

If it is determined that the heater 40 is broken down (Yes at Step S3), the braking unit 54 activates the brake 20 to cause the rotary electric machine 10 to stop or rotate at an extremely low speed (Step S4).

The temperature rise control unit 51 causes the power conversion unit 60 to energize the winding 12b of the rotary electric machine 10 (Step S5). At Step S5, when the AC mode is selected, the AC command unit 52 commands the power conversion unit 60 to supply the alternating current to the rotary electric machine 10. When the DC mode is selected, the DC command unit 53 commands the power conversion unit 60 to supply the direct current to the rotary electric machine 10. As described above, through the processing at Step S4 or Step S5, the temperature of the rotary electric machine 10 is raised and the temperature of the bearing 15 is raised.

The determination unit 55 detects the temperature of the rotary electric machine 10 again based on the signal output from the temperature sensor 30 (Step S6). The determination unit 55 then determines whether the temperature detected at Step S6 satisfies the certain condition (Step S7). Specifically, at Step S7, the determination unit 55 determines whether the temperature of the rotary electric machine 10 is lower than a second certain temperature. The second certain temperature is set to be equal to or higher than the first certain temperature.

If it is determined that the temperature of the rotary electric machine 10 satisfies the certain condition, that is, it is determined that the temperature of the rotary electric machine 10 is lower than the second certain temperature (Yes at Step S7), the process returns to Step S6. On the other hand, if it is determined that the temperature of the rotary electric machine 10 does not satisfies the certain condition, that is, when the temperature of the rotary electric machine 10 reaches the second certain temperature (No at Step S7), the bearing 15 is presumed to be heated sufficiently. Accordingly, the temperature rise control unit 51 stops the energization to the winding 12b of the rotary electric machine 10, and the braking unit 54 releases the braking of the brake 20 (Step S8).

In this way, the winding 12b of the rotary electric machine 10 is energized so that the temperature of the rotary electric machine 10 is raised under the certain condition. Due to this, the temperature of the bearing 15 can be raised by energizing the winding 12b at appropriate timing when the bearing 15 is required to be heated.

Because the temperature of the bearing 15 is raised by energizing the winding 12b of the rotary electric machine 10 when the heater 40 is broken down, the temperature of the bearing 15 can securely be raised even when the heater 40 is broken down.

In the flowchart of FIG. 10, if it is determined that the heater 40 is not broken down (No at Step S3), the heater control unit 56 causes the heater 40 to be energized to heat the rotary electric machine 10 (Step S9). Due to this, the temperature of the rotary electric machine 10 is raised, and accordingly, the temperature of the bearing 15 can be raised.

Subsequently, the processing at Steps S10 and S11 is performed. The processing at Steps S10 and S11 is the same as that at Steps S6 and S7 described above, so that the description thereof is not repeated here. If it is determined that the temperature of the rotary electric machine 10 does not satisfy the certain condition (No at Step S11), the heater control unit 56 stops the energization to the heater 40 (Step S12).

At Step S7 described above, timing to stop the energization to the rotary electric machine 10 is determined based on the temperature of the rotary electric machine 10. However, the embodiment is not limited thereto. The configuration may be such that time required for raising the temperature of the rotary electric machine 10 to the second certain temperature is estimated, for example, based on the temperature of the rotary electric machine 10 detected at Step S1, and the winding 12b of the rotary electric machine 10 is energized or the heater 40 is energized until the estimated time elapses.

In the above example, the rotary electric machine 10 is energized when the heater 40 is broken down. However, the embodiment is not limited thereto. The configuration may be such that both of the rotary electric machine 10 and the heater 40 are energized when the temperature of the rotary electric machine 10 satisfies the certain condition. For example, in the flowchart of FIG. 10, Step S3 may be eliminated, and the processing at Step S4 and Step S9 may be performed when it is determined that the temperature of the rotary electric machine 10 satisfies the certain condition at Step S2. Accordingly, the temperature of the rotary electric machine 10 can be raised at an early stage, and the temperature of the bearing 15 can also be raised at an early stage.

The configuration may be such that the heater 40 and the heater control unit 56 are removed, and the temperature of the bearing 15 is raised only by energizing the rotary electric machine 10. In this case, in the flowchart of FIG. 10, Steps S3 and S9 to S12 are eliminated, and the processing at Step S4 is performed when it is determined that the temperature of the rotary electric machine 10 satisfies the certain condition at Step S2. In this way, the configuration of the wind power generation system 1 can be simplified by removing the heater 40 and the heater control unit 56, and a need for maintenance of the heater 40 can be eliminated, so that the maintainability of the wind power generation system 1 can be improved.

When the DC mode is selected and the direct current is supplied to the rotary electric machine 10 (synchronous machine 10b), the rotating magnetic field is not generated in the stator 12, and the rotational torque is not generated in the rotor 13 and the rotor shaft 14. Accordingly, the configuration may be such that the brake 20 and the braking unit 54 are removed when the direct current is supplied. In this case, in the flowchart of FIG. 10, Step S4 is eliminated, and the processing at Step S5 is performed when it is determined that the heater 40 is broken down at Step S3. In this way, the configuration of the wind power generation system 1 can be simplified by removing the brake 20 and the braking unit 54.

As described above, the wind power generation system 1 according to the embodiment includes the rotary electric machine 10 and the temperature rise control unit 51. The temperature rise control unit 51 causes the winding 12b of the rotary electric machine 10 to be energized so that the temperature of the rotary electric machine 10 is raised. Accordingly, the temperature of the bearing 15 of the rotary electric machine 10 can be raised without using the heater 40, and the lubrication performance of the bearing 15 can be prevented from being decreased.

In the configuration of the wind power generation system 1 described above, the rotary electric machine 10 is used for wind power generation. However, an application of the rotary electric machine 10 is not limited to the wind power generation. The rotary electric machine 10 described above may be applied to a rotary electric machine arranged at a place where an environment temperature is relatively low, such as a hydroelectric power generation system and an outdoor pump. In this case, the rotary electric machine 10, the brake 20, the control device 50 for a rotary electric machine, and the like described above function as a "rotary electric machine system".

The wind power generation system 1 includes the brake 20. However, the embodiment is not limited thereto. Any type of braking mechanism may be used as long as it can brake the rotor shaft 14. For example, the braking mechanism may be configured to brake the rotor shaft 14 by punching a hole in the rotor shaft 14 and fitting a lock pin into the punched hole.

The temperature sensor 30 is arranged corresponding to each of the rotary electric machines 10. However, the embodiment is not limited thereto. For example, single temperature sensor may be arranged in the nacelle 81 or outdoors, and the determination unit 55 may determine whether the temperature in the nacelle 81 or an outdoor environment temperature detected by the single temperature sensor satisfies the certain condition.

The matrix converter is exemplified as the power conversion unit 60. However, the embodiment is not limited thereto. For example, the power conversion unit 60 may be an inverter. FIG. 1 illustrates an example in which the control device 50 for a rotary electric machine and the power conversion unit 60 are separately provided. Alternatively, the control device 50 for a rotary electric machine and the power conversion unit 60 may be integrally configured.

## Claims

1. A wind power generation system (1) comprising:
a rotary electric machine (10); and
a temperature rise control unit (51) that causes winding (12b) of the rotary electric machine (10) to be energized so that temperature of the rotary electric machine (10) is raised.

2. The wind power generation system (1) according to claim 1, further comprising:
a matrix converter (60) that includes a plurality of bidirectional switches (Sw) arranged between an AC power supply (70) and the rotary electric machine (10), and supplies electric power to the rotary electric machine (10) when the temperature rise control unit (51) causes the winding (12b) of the rotary electric machine (10) to be energized.

3. The wind power generation system (1) according to claim 1 or 2, further comprising:
a braking unit (54) that causes the rotary electric machine (10) to stop or rotate at an extremely low speed, wherein
the temperature rise control unit (51) causes the winding (12b) of the rotary electric machine (10) to be energized when the braking unit (54) causes the rotary electric machine (10) to stop or rotate at an extremely low speed.

4. The wind power generation system (1) according to claim 3, wherein the temperature rise control unit (51) causes the winding (12b) of the rotary electric machine (10) to be energized by controlling torque when the braking unit (54) causes the rotary electric machine (10) to stop or rotate at an extremely low speed.

5. The wind power generation system (1) according to claim 2, further comprising a DC command unit (53) that causes the matrix converter (60) to supply a direct current to the rotary electric machine (10) when the temperature rise control unit (51) causes the winding (12b) of the rotary electric machine (10) to be energized.

6. The wind power generation system (1) according to any one of claims 1 to 4, wherein the rotary electric machine (10) is an induction machine (10a), the wind power generation system (1) further comprising:
an AC command unit (52) that causes an alternating current to be supplied to the rotary electric machine (10) when the temperature rise control unit (51) causes the winding (12b) of the rotary electric machine (10) to be energized.

7. The wind power generation system (1) according to any one of claims 1 to 6, further comprising:
a determination unit (55) that determines whether the temperature of the rotary electric machine (10) satisfies a certain condition, wherein
if the determination unit (55) determines that the temperature of the rotary electric machine (10) satisfies the certain condition, the temperature rise control unit (51) causes the winding (12b) of the rotary electric machine (10) to be energized.

8. The wind power generation system (1) according to any one of claims 1 to 7, further comprising:
a heater (40) mounted to the rotary electric machine (10).

9. The wind power generation system (1) according to claim 8, wherein the temperature rise control unit (51) causes the winding (12b) of the rotary electric machine (10) to be energized when the heater (40) is broken down.

10. A method for controlling a wind power generation system (1), the method comprising:
determining whether temperature of a bearing (15) pivotally supporting a rotor shaft (14) of a rotary electric machine (10) needs to be raised; and
causing winding (12b) of the rotary electric machine (10) to be energized so that temperature of the rotary electric machine (10) is raised.

11. A rotary electric machine system comprising:
a rotary electric machine (10); and
a temperature rise control unit (51) that causes winding (12b) of the rotary electric machine (10) to be energized so that temperature of the rotary electric machine (10) is raised.

12. A control device (50) for a rotary electric machine, the control device comprising:
a temperature rise control unit (51) that causes winding (12b) of a rotary electric machine (10) to be energized so that temperature of the rotary electric machine (10) is raised.
